# EUROPÄISCHE PATENTSCHRIFT

(11) **EP 2 072 583 B1**
(45) Veröffentlichungstag und Bekanntmachung des Hinweises auf die Patenterteilung: **14.05.2014**
(21) Anmeldenummer: 08021341.6
(22) Anmeldetag: 09.12.2008
(51) Int. Cl.: C08L 83/04, C09D 183/04, C09D 143/04

(54) **Silan-modifizierte Bindemitteldispersionen**
Silane modified adhesive dispersions
Dispersions de liant modifiées par silane

(30) Priorität: 19.12.2007 DE 102007061871
(43) Veröffentlichungstag der Anmeldung: 24.06.2009
(73) Patentinhaber: Bayer Intellectual Property GmbH, 40789 Monheim (DE)
(72) Erfinder: Münzmay, Thomas, Dr., verstorben (DE); Nennemann, Arno, Dr., 51469 Bergisch Gladbach (DE); Irle, Christoph, Dr., 41539 Dormagen (DE); Yuva, Nusret, 51399 Burscheid (DE); Münzmay, Alice, 41539 Dormagen (DE)
(74) Vertreter: BIP Patents

(56) Entgegenhaltungen:
- WO-A1-2007/025670
- US-A1- 2004 071 998

## Beschreibung

Die Erfindung betrifft wässrige Zubereitungen enthaltend silan-modifizierten polymeren Bindemittel mit Siloxananteil und anorganische Nanopartikel, ein Verfahren zu deren Herstellung sowie deren Verwendung zur Herstellung von wässrigen Beschichtungsmitteln.

In modernen Lackierkonzepten von Automobilen spielt der Klarlack als oberste Schicht eine wesentliche Rolle. Dabei ist die Schutzfunktion des Klarlackes neben ästhetischen Effekten wie hohem Glanz und Transparenz ein wesentlicher Aspekt. Der Klarlack schützt die darunter liegenden Lackschichten gegen äußere Einflüsse wie Sonnenlicht, Wasser, Lösemittel und aggressive Chemikalien und nicht zuletzt gegen mechanische Beanspruchung. Die Kratzfestigkeit von Automobil-Klarlacken ist deshalb nach wie vor ein wesentliches Kriterium für die Qualität eines Automobil-Klarlackes.

Nanopartikel in polymeren Beschichtungen können Eigenschaften wie Kratzfestigkeit, UV-Schutz oder Leitfähigkeit gezielt verbessern. Die Kontrolle von Oberflächenmodifizierung und Dispergierung der Nanopartikel bestimmen das erforderliche transparente Erscheinungsbild der Beschichtungen sowie deren Eigenschaften.

Zur Einbringung der Nanopartikel in Beschichtungsmittelformulierungen sind in der Vergangenheit unterschiedliche Ansätze verfolgt worden. Dabei können die Partikel direkt in die Harz- oder Härterkomponente oder in die applikationsfertige Beschichtungsmittel eingemischt werden. Bei wässrigen Systemen besteht die Möglichkeit der Dispergierung der Partikel in die wässrige Phase. Ferner sind die in-situ Herstellung der Partikel in einer der Bindemittelkomponenten und eine Oberflächenanpassung entweder an die Harz oder die Härterkomponente beschrieben worden.

Aus praktischer Sicht ist es vorteilhaft, die Nanopartikel als stabile Masterbatche in einer der Komponenten zu dispergieren, so dass eine langfristige Lagerstabilität und eine einfache Handhabbarkeit bei der Formulierung von Lacken gewährleistet ist. In der Endanwendung müssen die Nanopartikel ebenfalls gut und feinteilig dispergiert sein, damit sich vorteilhafte Eigenschaften wie Transparenz, Kratzfestigkeit oder Leitfähigkeit ergeben.

Üblicherweise werden die Nanopartikel in der Praxis in die Harzkomponente, in die wässrige Phase bzw. in die fertige Mischung aus Härter und Harz kurz vor der Aushärtung eindispergiert. In der Regel ist es dazu erforderlich, die Oberfläche der Nanopartikel an die spezifische Matrix des Beschichtungsmittels bzw. des Klebstoffs anzupassen. Nachteil einer einfachen Einmischung modifizierter Nanopartikel ist die Abhängigkeit der Stabilität von der vollständigen Formulierung, d.h. von allen Formulierungsbestandteilen. Die Variation eines Parameters kann hier zur Entmischung führen (Pilotek, Steffen; Tabellion, Frank (2005), European Coatings Journal, 4, 170ff).

In der WO-A 2006/008120 werden wässrige Dispersionen aus polymeren und/oder oligomeren organischen Bindemitteln und anorganischen Nanopartikeln beschrieben. Die Nanopartikel werden durch Zusatz von Silan-funktionellen Verbindungen oberflächenmodifiziert. Nachteilig ist hier jedoch, dass der Glanz und Haze der resultierenden Beschichtungen nicht den hohen Anforderungen der Automobilklarlacke genügt.

Aus dem Stand der Technik ist der Einsatz von Polydimethylsiloxanen (PDMS) zur Modifizierung von Lacksystemen bekannt. Durch die hohe Oberflächenspannung von PDMS werden spezielle Eigenschaften erzeugt wie gute Oberflächenbenetzung, Slip-Beständigkeit and eine easy-to-clean Oberfläche (Reusmann in Farbe und Lack, 105, Jahrgang 8/99, Seite 40-47, Adams in Paintindia, October 1996, Seite 31-37).

Um einen guten PDMS Einbau zu gewährleisten und Migration des PDMS weitestgehend zu vermeiden, werden oft organofunktionelle PDMS-Typen wie alkylenamin- oder alkylenhydroxylfunktionelle PDMS-Derivate verwendet. Solche Lacksysteme werden z.B. in WO91/18954, EP-A 0 329 260 oder US 4 774 278 beschrieben.

Die aminfunktionellen PDMS-Typen haben allerdings den Nachteil, dass die Topfzeit von darauf basierten Polyurethansystemen aufgrund der hohen Neigung zur Hamstoffbildung extrem verkürzt ist.

Die bekannten hydroxylfunktionellen PDMS-Typen führen zwar zu verbesserten Topfzeiten, jedoch weisen sie in der Regel Inkompatibilitäten mit der Polyisocyanatkomponente auf, so dass keine homogenen Filme hergestellt werden können und die Vernetzung nur unvollständig stattfindet. Dadurch liegt freies ungebundenes PDMS im Lack vor, welches mit der Zeit aus der Beschichtung migriert und zu Eigenschaftsverschlechterung der Beschichtung führt.

In der WO-A 2007/025670 werden Zweikomponenten-Beschichtungsmittel offenbart, die als Bindemittel eine Polyisocyanatkomponente in Kombination mit einer gegenüber Isocyanatgruppen reaktionsfähigen Reaktivkomponente, insbesondere einer Polyhydroxylkomponente, enthalten. Die dort beschriebenen Zusammensetzungen eignen sich zur Herstellung von hochwertigen Überzügen, die sich insbesondere durch verbesserte Easy-to-clean Eigenschaften bedingt durch einen hochfunktionellen Hydroxy-Polydimethylsiloxanbaustein auszeichnen, während Härte und Ethanolbeständigkeit nicht verbessert werden. Eine Verbesserung der Kratzfestigkeit wird nicht beschrieben und konnte auch nicht nachgewiesen werden.

Von daher besteht nach wie vor der dringende Bedarf, wässrige Automobil-Klarlacke, die eine verbesserte Kratzfestigkeit bei guten optischen Eigenschaften aufweisen, bereitzustellen.

Überraschend wurde nun gefunden, dass wässrige Copolymerisate, welche hydroxylgruppenhaltige Polyorganosiloxane enthalten und welche mit einer bestimmten Klasse von Silanen modifiziert sind, in Kombination mit anorganischen Nanopartikeln, zur Herstellung von Beschichtungen mit deutlich verbesserter Kratzbeständigkeit bei ausgezeichnetem Glanz und sehr niedrigem Haze (Trübheit) geeignet sind.

Die Aufgabe der vorliegenden Erfindung bestand somit in der Bereitstellung von hochwertigen Beschichtungsmitteln, insbesondere als Automobil-Klarlacke, die einen optimalen Glanz und Haze aufweisen und eine verbesserte Kratzfestigkeit zeigen. Des Weiteren sollten die Dispersionen ausreichend lagerstabil sein.

Gegenstand der vorliegenden Erfindung sind daher wässrige Zubereitungen enthaltend
- A): ein Silan-modifiziertes Copolymerisat a1) und hydroxylgruppenhaltige Polyorganosiloxane a2),
- B): anorganische Partikel, welche gegebenenfalls oberflächenmodifiziert sind, mit einer mittels dynamischer Lichtstreuung in Dispersion bestimmten mittleren Partikelgröße (Z-Mittelwert) von kleiner als 200 nm sowie
- C): Wasser.

Das Silan-modifizierte Copolymerisat a1) enthält Gruppen der allgemeinen Formel (1)

-Si(R¹O)₂R² (1)

in welcher
- R¹: ein C₂- bis C₈-Alkyl-, bevorzugt ein C₃- bis C₆-Alkylrest ist und
- R²: gleich (R¹O) oder ein C₁- bis C₅-Alkyl-, bevorzugt gleich (R¹O) oder ein C₁- bis C3-Alkylrest ist.

Die hydroxylgruppenhaltigen Polyorganosiloxane a2) sind Verbindungen gemäß der allgemeinen Formel (I), 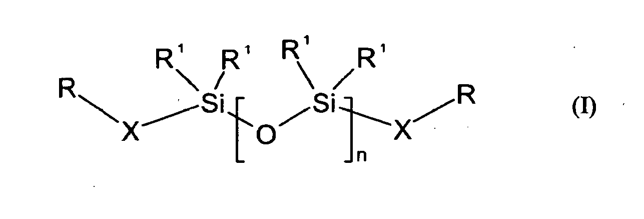 in welcher
- X: ein aliphatischer, gegebenenfalls verzweigter C₁- bis C₁₀-Rest, bevorzugt Methyl-, Ethyl-, n-Propyl-, iso-Propyl, n-Butyl-, iso-Butyl-, tert.-Butylrest, besonders bevorzugt Methylrest oder
eine [-CH₂-O-(CH₂)ₚ-]Si Einheit mit r = 1 bis 4, bevorzugt mit r = 3 ist,
- R: eine -CH(OH)Y Gruppe ist, in welcher
- Y: eine -CH₂N(R²R³) Gruppe ist, wobei
- R²: ein H, ein Methyl-, Ethyl-, n-Propyl-, iso-Propyl-, Cyclohexylrest, ein 2-Hydroxyethyl-, 2-Hydroxypropyl-, 3-Hydroxypropylrest sein kann und
- R³: ein 2-Hydroxyethyl-, 2-Hydroxypropyl-, 3-Hydroxypropylrest sein kann,
- R¹: gleich oder verschieden sein kann und Wasserstoff oder ein gegebenenfalls heteroatomhaltiger C₁- bis C₁₀-Kohlenwasserstoffrest ist und
- n: 1 bis 40 ist.

In einer ersten Ausführungsform (α) ist die Komponente a1) ein Copolymerisat, das aufgebaut ist aus
I) einem hydroxyfunktionellen, hydrophoben Polymerisat, enthaltend als Aufbaumonomere
   Ia) (Meth)-acrylsäureester mit C₁- bis C₁₈-Kohlenwasserstoffresten im Alkoholteil und/oder Vinylaromaten und/oder Vinylester,
   Ib) hydroxyfunktionelle Monomere und
   IS1) Silan-funktionelle, zur Polymerisation befähigte Monomere sowie
II) einem hydroxyfunktionellen, hydrophilen Polymerisat, enthaltend als Aufbaukomponenten
   IIa) (Meth)-acrylsäureester mit C₁- bis C₁₈-Kohlenwasserstoffresten im Alkoholteil und/oder Vinylaromaten und/oder Vinylester,
   IIb) hydroxyfunktionelle Monomere und
   IIc) säurefunktionelle Monomere.

Diese Ausführungsform (α) ist bevorzugt.

In einer weiteren Ausführungsform (β) ist die Komponente a1) ein Copolymerisat, das aufgebaut ist aus
I) einem hydroxyfunktionellen, hydrophoben Polymerisat, enthaltend als Aufbaumonomere
   Ia) (Meth)-acrylsäureester mit C₁- bis C₁₈-Kohlenwasserstoffresten im Alkoholteil und/oder Vinylaromaten und/oder Vinylester,
   Ib) hydroxyfunktionelle Monomere sowie
II) einem hydroxyfunktionellen, hydrophilen Polymerisat, enthaltend als Aufbaukomponenten
   IIa) (Meth)-acrylsäureester mit C₁- bis C₁₈-Kohlenwasserstoffresten im Alkoholteil und/oder Vinylaromaten und/oder Vinylester,
   IIb) hydroxyfunktionelle Monomere,
   IIc) säurefunktionelle Monomere und
   IIS1) Silan-funktionelle, zur Polymerisation befähigte Monomere.

Der Anteil der Monomere Ia)/IIa) am Copolymerisat a1) in den Ausführungsformen (α) und (β) beträgt 34,3 bis 89,3 Gew.-Teile, bevorzugt 51,8 bis 84,8 Gew.-Teile und besonders bevorzugt 58 bis 81 Gew.-Teile, der Anteil der Monomere Ib)/IIb) am Copolymerisat a1) beträgt 10 bis 65 Gew.-Teile, bevorzugt 13,5 bis 46,5 Gew.-Teile und besonders bevorzugt 17 bis 40 Gew.-Teile, der Anteil der Monomere IIc) am Copolymerisat a1) beträgt 0,6 bis 12 Gew.-Teile, bevorzugt 1,2 bis 5,5 Gew.-Teile und besonders bevorzugt 1,25 bis 3,5 Gew.-Teile und der Anteil der Monomere IS1)/IIS1) am Copolymerisat a1) beträgt 0,1 bis 12 Gew.-Teile, bevorzugt 0,5 bis 5 Gew.-Teile und besonders bevorzugt 0,75 bis 3,5 Gew.-Teile.

Geeignete, Silan-funktionelle, zur Polymerisation befähigte Monomere IS1) sowie IIS1) sind z.B. Verbindungen der allgemeinen Formel (2)

(R¹O)₂R²Si-(CH=CH₂) (2)

in welcher
- R¹: ein C₂- bis C₈-Alkyl-, bevorzugt ein C₃- bis C₆-Alkylrest ist,
- R²: gleich (R¹O) oder ein C₁- bis C₅-Alkyl-, bevorzugt gleich (R¹O) oder ein C₁- bis C3-Alkylrest ist,
und/oder Verbindungen der allgemeinen Formel (3)

(R¹O)₂R²Si(CH₂)ₘ-O(CO)-(CR³=CH₂) (3)

in welcher
- R¹: ein C₂- bis C₈-Alkyl-, bevorzugt ein C₃- bis C₆-Alkylrest ist,
- R²: gleich (R¹O) oder ein C₁- bis C₅-Alkyl-, bevorzugt gleich (R¹O) oder ein C₁- bis C3-Alkylrest ist,
- R³: gleich H oder CH₃ ist und
- m: 1 bis 4, bevorzugt 3 ist.

Beispiele für geeignete, Silan-funktionelle, zur Polymerisation befähigte Monomere IS1) sowie IIS1) sind Vinyltriethoxysilan, Vinyltrisisopropoxysilan, Vinyl-tris-(2-methoxy)silan, Vinylmethyldiethoxysilan, Vinylmethyldiisopropoxysilan, Vinylethyldiethoxysilan, 3-(Triethoxysilyl)-propylmethacrylat oder 3-(Tris-isopropoxysilyl)-propylmethacrylat, Vinylphenyldiethoxysilan, Vinylphenylmethylethoxysilan oder Vinyltri-t-butoxysilan. Bevorzugt ist Vinyltrisisopropoxysilan.

Es ist ebenfalls möglich, dass die Komponente a1) (Ausführungsform (γ)) ein Copolymerisat ist, das aufgebaut ist aus
I) einem hydroxyfunktionellen, hydrophoben Polymerisat, enthaltend als Aufbaumonomere
   Ia) (Meth)-acrylsäureester mit C₁- bis C₁₈-Kohlenwasserstoffresten im Alkoholteil und/oder Vinylaromaten und/oder Vinylester,
   Ib) hydroxyfunktionelle Monomere,
II) einem hydroxyfunktionellen, hydrophilen Polymerisat, enthaltend als Aufbaukomponenten
   IIa) (Meth)-acrylsäureester mit C₁- bis C₁₈-Kohlenwasserstoffresten im Alkoholteil und/oder Vinylaromaten und/oder Vinylester,
   IIb) hydroxyfunktionelle Monomere,
   IIc) säurefunktionelle Monomere und
   IIS2) Monomere, welche neben Silan-Gruppen mindestens eine Epoxid-Funktion enthalten.

Der Anteil der Monomere Ia)/IIa) am Copolymerisat a1) in der Ausftihrungsform (γ) beträgt 33,8 bis 88,8 Gew.-Teile, bevorzugt 49,1 bis 83,9 Gew.-Teile und besonders bevorzugt 56 bis 79,5 Gew.-Teile, der Anteil der Monomere Ib)/IIb) am Copolymerisat a1) beträgt 10 bis 65 Gew.-Teile, bevorzugt 13,5 bis 48,3 Gew.-Teile und besonders bevorzugt 17 bis 40,5 Gew.-Teile, der Anteil der Monomere IIc) am Copolymerisat a1) beträgt 1 bis 15 Gew.-Teile, bevorzugt 1,85 bis 8 Gew.-Teile und besonders bevorzugt 2,5 bis 6,5 Gew.-Teile und der Anteil der Monomere IIS2) am Copolymerisat a1) beträgt 0,2 bis 12 Gew.-Teile, bevorzugt 0,75 bis 5,5 Gew.-Teile und besonders bevorzugt 1 bis 4,5 Gew.-Teile.

Beispiele für geeignete Monomere IIS2), welche neben Silan-Gruppen mindestens eine Epoxid-Funktion enthalten sind γ-Glycidoxypropyltriethoxysilan, γ-Glycidoxypropyl-tris-isopropoxysilan, γ -Glycidoxypropyl-diethoxy-methylsilan, Glycidoxypropyl-di-isopropoxy-methylsilan, β -(3,4-Epoxycyclohexyl)-triethoxysilan, β-(3,4-Epoxycyclohexyl)-tris-isopropoxysilan, β -(3,4-Epoxycyclohexyl)-diethoxy-methylsilan, β-(3,4-Epoxycyclohexyl)-di-isopropoxy-methylsilan, β -(3,4-Epoxycyclohexyl)-diethoxy-ethylsilan oder β -(3,4-Epoxycyclohexyl)-di-isopropoxyethylsilan. Bevorzugt ist γ-Glycidoxypropyltriethoxysilan, γ-Glycidoxypropyl-tris-isopropoxysilan, γ -Glycidoxypropyl-diethoxy-methylsilan, β-(3,4-Epoxycyclohexyl)-triethoxysilan oder β -(3,4-Epoxycyclohexyl)-tris-isopropoxysilan, besonders bevorzugt sind γ -Glycidoxypropyl-tris-isopropoxysilan, γ-Glycidoxypropyl-diethoxy-methylsilan und β -(3,4-Epoxycyclohexyl)-tris-isopropoxysilan.

Geeignete Monomere Ia)/IIa) sind die Veresterungsprodukte von Acryl- oder Methacrylsäure mit einfachen Akloholen z.B. Ethylacrylat, Ethylmethacrylat, n-Butylacrylat, iso-Butylacrylat, tert-Butylacrylat, 2-Ethylhexylacrylat, 2-Ethylhexyl-methacrylat, Methylmethacrylat, n-Butylmethacrylat, iso-Butylmethacrylat, tert-Butyhnethacrylat, Cyclohexylacrylat oder Cyclohexylmethacrylat, sowie Vinylphenyle wie Styrol, Vinyltoluol, α-Methylstyrol bzw. Mischungen dieser und anderer Monomere.

Weitere als Monomere Ia)/IIa) geeignete Verbindungen vom Typ (Meth)Acrylsäureester sind die Ester von Acrylsäure oder Methacrylsäure mit linearen, aliphatischen Monoolen mit acht Kohlenstoffatomen wie z.B. die so genannten Fett-Alkohole (Monoolen) oder mit linearen, aliphatischen, gesättigten Alkoholen, die sich von natürlich vorkommenden Fettsäuren ableiten wie Lauryl- (C₁₂), Myristyl- (C₁₄), Palmityl- (C₁₆) oder Stearyl- (C₁₈) Alkohol. Ebenfalls geeignete aliphatische, gesättigte Alkohole sind z.B. n-Octanol, Nonanol oder n-Decanol. Geeignete Monomere vom Typ (Meth)Acrylsäureester, die einen aliphatischen Rest mit mindestens acht Kohlenstoffatomen enthalten sind z.B. n-Octylacrylat, Nonylacrylat, n-Decylacrylat, Laurylacrylat, Myristylacrylat, Palmitylacrylat, Stearyacrylat sowie die entsprechenden Methacrylsäurederivate.

Weiterhin geeignet als Monomere des vorgenannten Typs sind Ester der Acrylsäure oder Methacrylsäure mit cycloaliphatischen Alkoholen (Monoolen) mit mindestens 10 Kohlenstoffatomen wie z.B. i-Bornylacrylat, i-Bornylmethacrylat, Dihydroxydicyclopentadienylacrylat oder 3,3,5-Trimethylcyclohexyl-methacrylat.

Geeignete Monomere Ia/IIa) sind weiterhin die Versterungsprodukte von Vinylalkohol mit linearen oder verzweigten, aliphatischen Corbonsäuren wie beispielsweise Vinylacetat, Vinylpropionat oder Vinylbutyrat. Bevorzugt sind die Vinylester verzweigter, aliphatischer Carbonsäuren der allgemeinen Formel (II), 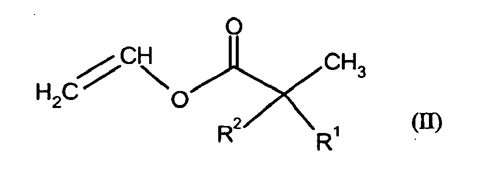 in welcher R¹ und R² gesättigte Alkylgruppen sind, enthaltend zusammen 6, 7 oder 8 C-Atome, entsprechend der Verbindungen VeoVa^{™} 9, 10 und 11.

Die genannten Monomere unterscheiden sich hinsichtlich der Glastemperatur ihrer Homopolymere:

| **Monomer** | **T_{G} [°C]** |
|---|---|
| VeoVa^{™} 9 | + 70 |
| VeoVa^{™} 10 | - 3 |
| VeoVa^{™} 11 | - 40 |

Bevorzugt als Monomere Ia)/IIa) sind n-Butylacrylat, iso-Butylacrylat, tert-Butylacrylat, 2-Ethylhexylacrylat, Methylmethacrylat, n-Butylmethacrylat, iso-Butylmethacrylat, tert-Butylmethacrylat, Cyclohexylacrylat, Cyclohexylmethacrylat, i-Bornylacrylat, i-Bornylmethacrylat sowie Styrol, besonders bevorzugt sind n-Butylacrylat, 2-Ethylhexylacrylat, Methylmethacrylat, n-Butylmethacrylat, tert-Butylmethacrylat, Cyclohexylmethacrylat, i-Bornylacrylat, i-Bomylmethacrylat sowie Styrol.

Optional können auch weitere zur radikalischen Copolymerisation befähigte Monomere als Verbindungen der Komponente Ia/IIa) bei der Herstellung von Copolymerisat a1) eingesetzt werden. Dies können beispielsweise Derivate der Acryl- oder Methacrylsäure wie Acrylamid, Methacrylamid, Acrylnitril oder Methacrylnitril sein. Weiterhin optional möglich sind Vinylether oder Vinylacetate. Als weitere gegebenenfalls in untergeordneten Mengen einzusetzende Komponenten Ia/IIa) kommen di- oder höher-funktionelle (Meth)acrylatmonomere und/oder Vinylmonomere, wie z.B. Hexandioldi(meth)acrylat oder Divinylbenzol in Frage.

Geeignete hydroxyfunktionelle Monomere Ib)/IIb) sind z.B. 2-Hydroxyethylmethacrylat, 2-Hydroxypropylmethacrylat, 2-Hydroxyethylacrylat, 2-Hydroxypropylacrylat, 4-Hydroxybutylacrylat oder 4-Hydroxybutylmethacrylat. Bevorzugte Monomere Ib)/IIb) sind 2-Hydroxyethylacrylat, 2-Hydroxyethylmethacrylat, 2-Hydroxypropylmethacrylat oder 4-Hydroxybutylacrylat sowie Mischungen dieser Verbindungen.

Geeignete olefinisch ungesättigte, säurefunktionelle Monomere IIc) sind sulfon- oder carbonsäurefunktionelle Monomere, bevorzugt carbonsäurefunktionelle Monomere wie Acrylsäure, Methacrylsäure, ß-Carboxyethylacrylat, Crotonsäure, Fumarsäure, Maleinsäureanhydrid, Itaconsäure oder Monoalkylester zweibasiger Säuren bzw. Anhydride wie z.B. Maleinsäure-monoalkylester, besonders bevorzugt sind Acryl- oder Methacrylsäure.

Ferner geeignet als Verbindungen der Komponente IIc) sind auch ungesättigte, radikalisch polymerisierbare Verbindungen mit Phosphat- bzw. Phosphonat- oder Sulfonsäure- bzw. Sulfonatgruppen, wie z.B. in der WO-A 00/39181 (S. 8, Z. 13 - S. 9, Z. 19) beschrieben werden.

Als Initiatoren für die Polymerisationsreaktion eignen sich organische Peroxide wie Di-tert.-Butylperoxid, Di-tert-Amylperoxid oder tert.-Butylperoxy-2-ethylhexanoat und Azoverbindungen wie Azodiisobuttersäurenitril (AIBN). Die eingesetzten Initiatormengen hängen vom gewünschten Molekulargewicht ab. Aus Gründen der Prozesssicherheit und des leichteren Handlings können Peroxidinitiatoren auch als Lösung in geeigneten organischen Lösemitteln der im Folgenden genannten Art eingesetzt werden.

Die Herstellung des Copolymerisats a1) erfolgt durch eine radikalisch initiierte Copolymerisation der Monomermischung I) und II) in organischen Lösemittel(gemischen). Die Menge an organischen Lösemitteln wird so bemessen, dass die resultierenden Lösungen der Copolymerisate al) einen Festkörpergehalt von 95 bis 60 Gew.-%, bevorzugt 92,5 bis 80 Gew.-% aufweisen.

Die Vorgehensweise zur Polymerisation der ungesättigten Monomere ist dem Fachmann an sich vertraut. Typischerweise wird dazu in einem Reaktionsgefäß ein geeignetes Lösungsmittel vorgelegt und die ungesättigten Monomere im Zulaufverfahren unter Einsatz eines Radikalinitiators polymerisiert.

Als geeignete organische Lösemittel kommen beliebige in der Lacktechnologie bekannte Lösemittel in Betracht, bevorzugt sind solche, die üblicherweise als Colöser in wässrigen Dispersionen eingesetzt werden, wie z.B. Alkohole, Ether, Ethergruppen-haltige Alkohole, Ester, Ketone oder unpolare Kohlenwasserstoffe z.B. aliphatische oder aromatische Kohlenwasserstoffen bzw. Gemische dieser Lösemittel.

Die Herstellung der Komponente a1) in der Ausführungsform (α) oder (β) erfolgt durch eine zweistufige Zugabe und Polymerisation der Monomerengemische I) und II) in der genannten Reihenfolge. Dabei wird in einem ersten Schritt (i) aus den Monomeren Ia) und Ib) ein hydroxyfunktionelles, hydrophobes Polymerisat I) mit einer OH-Zahl von 12 bis 250 mg KOH/g Feststoff, bevorzugt von 50 bis 200 mg KOH/g Feststoff hergestellt. In einem anschließenden Schritt (ii) wird in der aus Schritt (i) erhaltenen Lösung des Polymerisats I) das hydroxyfunktionelle, hydrophile Polymerisat II) aus den Monomeren IIa) bis IIc) hergestellt, wobei dieses hydroxyfunktionelle, hydrophile Polymerisat II) eine OH-Zahl von 20 bis 250 mg KOH/g Feststoff, bevorzugt von 120 bis 220 mg KOH/g Feststoff und eine Säurezahl von 50 bis 250 mg KOH/g Feststoff, bevorzugt von 110 bis 200 mg KOH/g Feststoff aufweist. Silan-funktionelle Monomere IS1) werden entsprechend mit dem Monomerengemisch Ia) und Ib) oder IIS2) mit dem Monomerengemisch IIa), IIb) und IIc) copolymerisiert.

Die Herstellung der Komponente a1) in der Ausführungsform (γ) erfolgt durch eine zweistufige Zugabe und Polymerisation der Monomerengemische I) und II) in der genannten Reihenfolge. Dabei wird in einem ersten Schritt (i) aus den Monomeren Ia) und Ib) ein hydroxyfunktionelles, hydrophobes Polymerisat I) mit einer OH-Zahl von 12 bis 250 mg KOH/g Feststoff, bevorzugt von 50 bis 200 mg KOH/g Feststoff hergestellt. In einem anschließenden Schritt (ii) wird in der aus Schritt (i) erhaltenen Lösung des Polymerisats I) das hydroxyfunktionelle, hydrophile Polymerisat II) aus den Monomeren IIa) bis IIc) und IIS2) hergestellt. In diesem Schritt erfolgt nach der radikalischen Polymerisation der Komponente IIa) bis IIc) simultan die Reaktion der Epoxidgruppen von IIS2) mit freien Carbonsäuregruppen. Diese Reaktion kann gegebenenfalls durch geeignete Veresterungskatalysatoren wie z.B. Dibutylzinndilaurat oder Zinndioctoat katalysiert werden. Das hydroxyfunktionelle, hydrophile Polymerisat II) weist eine OH-Zahl von 20 bis 250 mg KOH/g Feststoff, bevorzugt von 120 bis 220 mg KOH/g Feststoff und eine Säurezahl von 50 bis 250 mg KOH/g Feststoff, bevorzugt von 110 bis 200 mg KOH/g Feststoff auf.

Die Copolymerisate a1) weisen Molekulargewichte von 1.000 bis 50.000 Da, bevorzugt von 1.200 bis 20.000 Da und besonders bevorzugt von 1.500 bis 12.500 Da auf.

Zur Neutralisation der im Copolymerisat a1) einpolymerisierten Carboxylgruppen können organische Amine oder wasserlösliche, anorganische Basen eingesetzt werden. Bevorzugt sind N-Methylmorpholin, Triethylamin, Dimethylethanolamin, Dimethylisopropanolamin, Methyldiethanolamin, Triethanolamin oder Ethyldiisopropylamin. Ebenfalls geeignet sind Diethylethanolamin, Butanolamin, Morpholin, 2-Anünomethyl-2-methyl-propanol oder Isophorondiamin.

Das Neutralisationsmittel wird in solchen Mengen zugesetzt, dass der Neutralisationsgrad 70 bis 130 %, bevorzugt 90 bis 105 % der Carboxylgruppen beträgt, wobei besonders bevorzugt eine solche Menge Neutralisationsmittel zugesetzt wird, dass nach Überführung aller Carboxylgruppen in die Salzform noch freies Neutralisationsmittel vorhanden ist. Dies entspricht einem Neutralisationsgrad von >100 %.

Geeignete hydroxylgruppenhaltige Polyorganosiloxane a2) der allgemeinen Formel (I) sind gekennzeichnet durch ein zahlenmittleres Molekulargewicht von 200 bis 3000 g/mol und einer mittleren OH-Funktionalität von ≥ 1,8.

Bevorzugt weisen die hydroxylgruppenhaltigen Polyorganosiloxane a2) der allgemeinen Formel (I) zahlenmittlere Molekulargewichte von 250 bis 2250 g/mol, besonders bevorzugt von 350 bis 1500 g/mol auf.

Die hydroxylgruppenhaltigen Polyorganosiloxane a2) der allgemeinen Formel (I) sind erhältlich, indem entsprechende epoxyfunktionelle Polyorganosiloxane mit hydroxyalkylfunktionellen Aminen, bevorzugt in einem stöchiometrischen Verhältnis von Epoxygruppe zu Aminofunktion umgesetzt werden.

Die dazu eingesetzten epoxyfunktionellen Siloxane weisen bevorzugt 1 bis 4, besonders bevorzugt 2 Epoxygruppen pro Molekül auf. Ferner haben sie zahlenmittlere Molekulargewichte von 150 bis 2000 g/mol, bevorzugt von 250 bis 1500 g/mol, ganz besonders bevorzugt von 250 bis 1250 g/mol.

Bevorzugte epoxyfunktionelle Siloxane sind α,ω-Epoxysiloxane entsprechend der Formel (III), 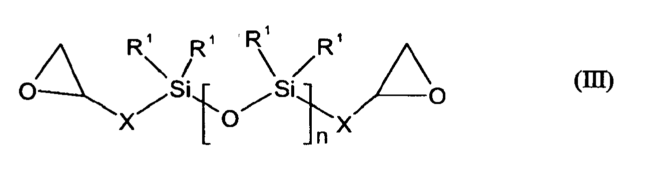 in welcher
- X: ein aliphatischer, gegebenenfalls verzweigter C₁- bis C₁₀-Rest, bevorzugt Methyl-, Ethyl-, n-Propyl-, iso-Propyl, n-Butyl-, iso-Butyl-, tert.-Butylrest, besonders bevorzugt Methylrest oder
eine [-CH₂-O-(CH₂)ₚ]-Si Einheit mit r = 1 bis 4, bevorzugt mit r = 3 ist,
- R¹: gleich oder verschieden sein kann und Wasserstoff oder ein gegebenenfalls heteroatomhaltiger C₁- bis C₁₀-Kohlenwasserstoffrest ist und
- n: 1 bis 40 ist.
- R¹: in den Formeln (I) und (III) ist bevorzugt Phenyl-, Alkyl-, Aralkyl-, Fluoralkyl-, Alkylethylencopropylenoxidgruppen oder Wasserstoff, wobei Phenyl- oder Methylgruppen besonders bevorzugt sind. Ganz besonders bevorzugt ist R¹ eine Methylgruppe.

Geeignete Verbindungen entsprechend Formel (III) sind beispielsweise solche der Formeln IIIa) und IIIb): 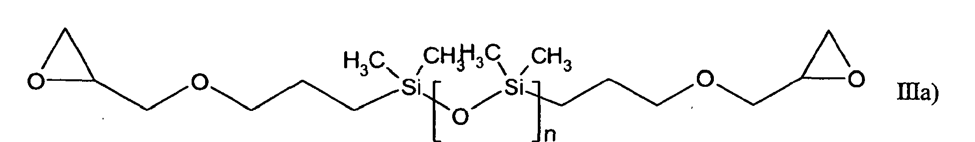 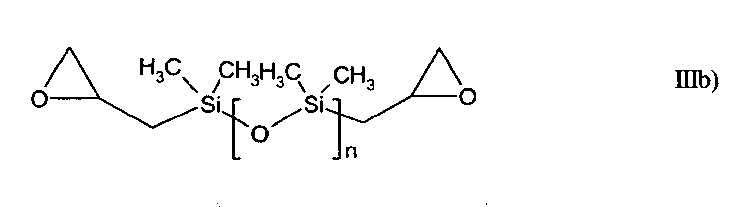 in welchen
- n: eine ganze Zahl von 4 bis 12, bevorzugt von 6 bis 9 ist.

Beispiele für kommerziell erhältliche Produkte dieser Reihe sind beispielsweise CoatOsil^{®} 2810 (Momentive Performance Materials, Leverkusen, Deutschland) oder Tegomer^{®} E-Si2330 (Tego Chemie Service GmbH, Essen, Deutschland).

Geeignete hydroxyalklylfunktionelle Amine entsprechen der allgemeinen Formel (IV) 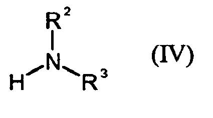 in welcher
- R²: ein H,
ein Methyl-, Ethyl-, n-Propyl-, iso-Propyl-, Cyclohexylrest, ein 2-Hydroxyethyl-, 2-Hydroxypropyl-, 3-Hydroxypropylrest sein kann und
- R³: ein 2-Hydroxyethyl-, 2-Hydroxypropyl-, 3-Hydroxypropylrest sein kann,

Bevorzugte Hydroxyalkylamine sind Ethanolamin, Propanolamin, Diethanolamin, Diisopropanolamin, Methylethanolamin, Ethylethanolamin, Propylethanolamin und Cyclohexylethanolamin. Besonders bevorzugt sind Diethanolamin, Diisopropanolamin oder Cyclohexylethanolamin. Ganz besonders bevorzugt ist Diethanolamin.

Zur Herstellung der Komponente a2) wird das epoxyfunktionelle Siloxan der allgemeinen Formel (III) gegebenenfalls in einem Lösemittel vorgelegt und dann mit der erforderlichen Menge des Hydroxyalkylamins (IV) oder einer Mischung mehrerer Hydroxyalkylamine (IV) umgesetzt. Die Reaktionstemperatur beträgt typischerweise 20 bis 150 °C und wird solange geführt, bis keine freien Epoxygruppen mehr nachweisbar sind.

Besonders bevorzugt werden hydroxyalkylfunktionelle Siloxane a2) der Formel (I) eingesetzt, die durch oben aufgeführte Umsetzung epoxyfunktioneller Polyorganosiloxane mit Hydroxyalklyaminen erhalten wurden.

Besonders bevorzugte Polyorganosiloxane a2) sind beispielsweise solche der Formeln Ia) bis Ih): 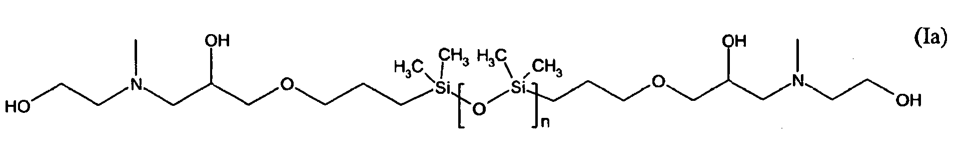 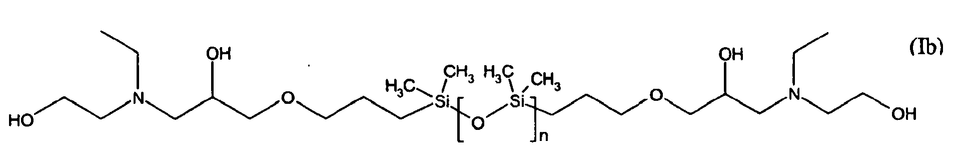 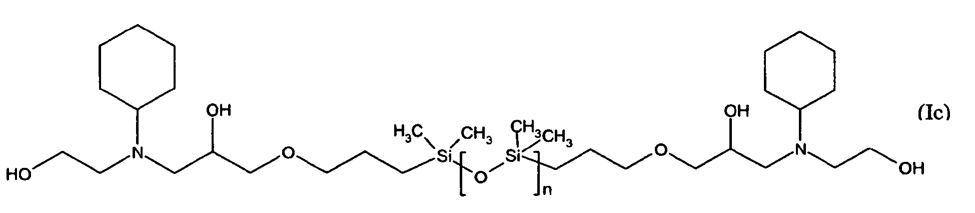 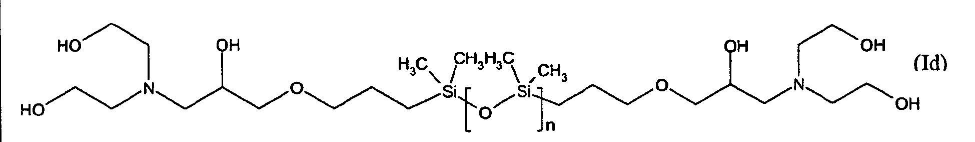 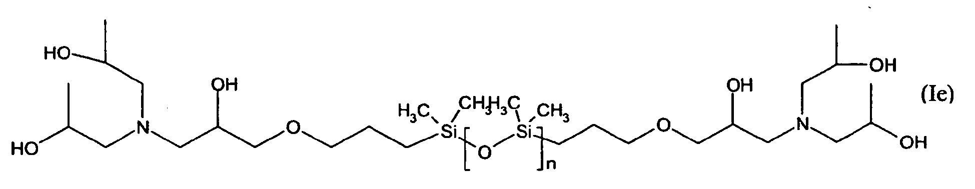 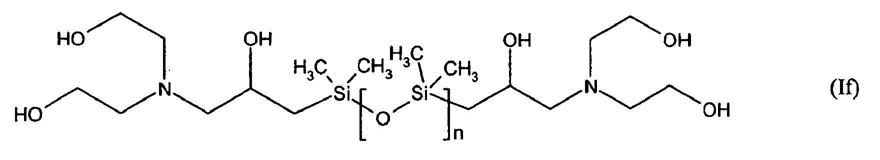 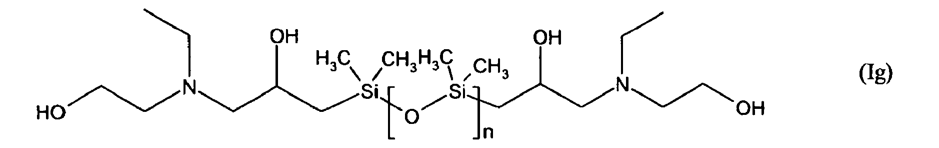 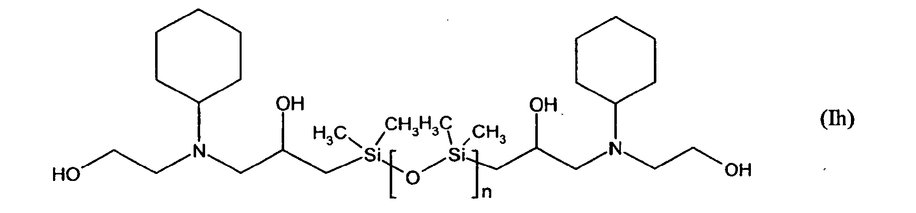 wobei n = 4 bis 12, bevorzugt 6 bis 9 ist.

Ebenfalls geeignet als Komponente a2) sind beispielsweise hydroxyalkylfunktionelle Siloxane (α, ω-Carbinole) entsprechend Formel (V), 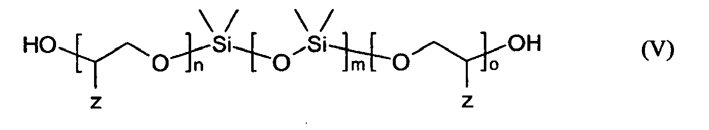 in welcher
- m: 5 bis 15,
- Z: H oder Methyl, bevorzugt H und
- n, o: 1 bis 12, bevorzugt 1 bis 5 ist.

Hydroxyalkylfunktionelle Siloxane (α, ω-Carbinole) der Formel (V) haben bevorzugt zahlenmittlere Molekulargewichte von 250 bis 2250 g/mol, besonders bevorzugt von 250 bis 1500 g/mol, ganz besonders bevorzugt von 250 bis 1250 g/mol. Beispiele für kommerziell erhältliche hydroxyalkylfunktionelle Siloxane des genannten Typs sind Baysilone^{®} OF-OH 502 3 und 6%ig (Fa. GE-Bayer Silicones, Leverkusen, Deutschland).

Ein weiterer Weg zur Herstellung geeigneter hydroxyfunktioneller Polyorganosiloxane entsprechend der Komponente a2) ist die Umsetzung der vorgenannten hydroxyalkylfunktionellen Siloxane vom α, ω-Carbinol-Typ der Formel (V) mit cyclischen Lactonen. Geeignete cyclische Lactone sind beispielsweise ε-Caprolacton, γ-Butyrolacton oder Valerolacton.

Dies geschieht in einem Verhältnis von OH-Gruppen zu Lactonfunktionen von 1:2 bis 2:1, bevorzugt in einem stöchiometrischen Verhältnis von OH-Gruppen zu Lactonfunktionen. Die so erhaltenen hydroxyalkylfunktionellen Siloxane a2) sind bevorzugt. Beispielhaft für eine solche Verbindung sind Polyorganosiloxane a2) der allgemeinen Formel (VI) 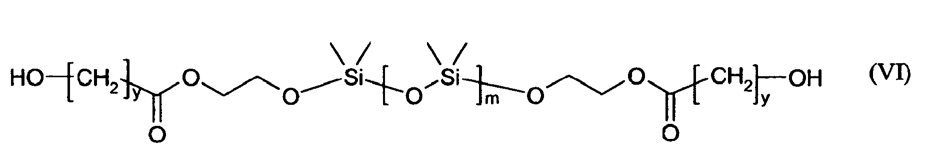 in welcher
m = 5 bis 15 und
y = 2 bis 4, bevorzugt 4 sein kann.

Die hydroxylgruppenhaltigen Polyorganosiloxane a2) werden bevorzugt der Harzschmelze der Komponente a2) vor deren Dispergierung in Wasser zugesetzt und homogen eingearbeitet. Besonders bevorzugt werden die hydroxylgruppenhaltigen Polyorganosiloxane a2) der Harzschmelze der Komponente a2) gleichzeitig mit dem zur Neutralisation der in das Copolymerisat a1) eingebauten Carboxylgruppen eingesetzten Komponente eingearbeitet.

Als Partikel B) kommen anorganische Oxide, Mischoxide, Hydroxide, Sulfate, Carbonate, Carbide, Boride und Nitride von Elementen der II bis IV Hauptgruppe und/oder Elemente der I bis VIII Nebengruppe des Periodensystems einschließlich der Lanthanide in Frage. Bevorzugte Partikel B) sind Siliziumoxid, Aluminiumoxid, Ceroxid, Zirkonoxid, Nioboxid und Titanoxid, besonders bevorzugt sind Siliziumoxid-Nanopartikel.

Die in B) eingesetzten Partikel weisen bevorzugt mittlere Partikelgrößen mittels dynamischer Lichtstreuung in Dispersion bestimmt als Z-Mittelwert von 5 bis 100 nm, besonders bevorzugt 5 bis 50 nm auf.

Bevorzugt weisen wenigstens 75 %, besonders bevorzugt wenigstens 90 %, ganz besonders bevorzugt wenigstens 95 % aller eingesetzten Partikel die vorstehend definierten Größen auf.

Während oder im Anschluss an die Herstellung der Mischung aus Komponenten a1) und a2) werden die gegebenenfalls oberflächenmodifizierten Nanopartikel B) eingebracht. Dies kann durch einfaches Einrühren der Partikel erfolgen. Denkbar ist jedoch auch der Einsatz erhöhter Dispergierenergie, wie beispielsweise durch Ultraschall, Strahldispergierung oder Hochgeschwindigkeitsrüher nach dem Rotor-Stator-Prinzip erfolgen kann. Bevorzugt ist einfaches mechanisches Einrühren.

Die Partikel B) können prinzipiell sowohl in Pulverform als auch in Form von kolloiden Suspensionen oder Dispersionen in geeigneten Lösungsmitteln eingesetzt werden. Die anorganischen Nanopartikel B) werden bevorzugt in kolloid disperser Form in organischen Lösungsmitteln (Organosole) oder in Wasser eingesetzt.

Für die Organosole geeignete Lösemittel sind Methanol, Ethanol, i-Propanol, Aceton, 2-Butanon, Methyl-isobutylketon, Butylacetat, Ethylacetat, 1-Methoxy-2-propylacetat, Toluol, Xylol, 1,4-Dioxan, Diacetonalkohol, Ethylenglykol-n-propylether oder beliebige Gemische solcher Lösungsmittel. Geeignete Organosole weisen einen Feststoffgehalt von 10 bis 60 Gew.-%, bevorzugt 15 bis 50 Gew.-% auf. Geeignete Organosole sind beispielsweise Siliziumdioxid Organosole wie sie z.B. unter den Handelsnamen Organosilicasol^{®} und Suncolloid^{®} (Nissan Chem. Am. Corp.) oder unter der Bezeichnung Highlink^{®}NanO G (Clariant GmbH) erhältlich sind.

Soweit die Nanopartikel in organischen Lösemitteln (Organosole) zum Einsatz kommen, werden diese mit der Mischung aus Komponenten a1) und a2) vor deren Dispergierung mit Wasser vermischt. Die resultierenden Mischungen werden anschließend durch Zusatz von Wasser oder durch Überführung in Wasser dispergiert. Die Mischung der Organosolen mit der Mischung aus Komponenten a1) und a2) kann sowohl vor als auch nach Neutralisation der in der Mischung aus Komponenten a1) und a2) einpolymerisierten Carboxylgruppen erfolgen. Das organische Lösemittel des Organosols kann nach Bedarf vor oder nach der Dispergierung mit Wasser, vorzugsweise im Anschluss an die Dispergierung, mit Wasser destillativ entfernt werden.

Im Sinne der vorliegenden Erfindung werden weiterhin bevorzugt anorganische Partikel B) in Form ihrer wässrigen Zubereitungen verwendet. Besonders bevorzugt ist der Einsatz anorganischer Partikel B) in Form wässriger Zubereitungen oberflächenmodifizierter, anorganischer Nanopartikel. Diese können beispielsweise vor oder gleichzeitig mit der Einarbeitung in das silanmodifizierte, polymere organische Bindemittel oder eine wässrige Dispersion des silanmodifizierten, polymeren organischen Bindemittels durch Silanisierung modifiziert werden. Diese Methode ist im Prinzip Literatur bekannt und beispielsweise in DE-A 19846660 oder WO 03/44099 beschrieben.

Weiterhin kann die Oberfläche der anorganischen Nanopartikel adsorptiv/assoziativ durch Tenside oder Blockcopolymere modifiziert werden, wie beispielsweise in WO 2006/008120 beschrieben.

Bevorzugte Oberflächenmodifizierung ist die Silanisierung mit Alkoxysilanen und/oder Chlorsilanen. Besonders bevorzugt ist die partielle Modifizierung mit γ -Glycidoxypropyltrimethoxysilan entsprechend der WO 2004/035474.

Bevorzugte wässrige, kommerzielle Nanopartikel-Dispersionen sind Levasile^{®} (H.C. Starck GmbH, Goslar, Deutschland) und Bindzile^{®} (EKA Chemical AB, Bohus, Sweden). Besonders bevorzugt werden wässrige Dispersionen von Bindzil^{®} CC 15, Bindzil^{®} CC 30 und Bindzil^{®}CC 40 der Fa. EKA (EKA Chemical AB, Bohus, Schweden) eingesetzt.

Soweit die Nanopartikel in wässriger Form zum Einsatz kommen, werden diese den wässrigen Dispersionen der Copolymerisate a1) zugesetzt. In einer weiteren Ausführungsform werden die wässrigen Nanopartikel-Kolloide den Copolymerisaten a1) nach der Neutralisation der in der Mischung aus Komponenten a1) und a2) einpolymerisierten Carboxylgruppen zugesetzt und gegebenenfalls anschließend mit Wasser weiter verdünnt.

Die erfindungsgemäßen wässrigen Zubereitungen können zu wässrigen Beschichtungsmitteln verarbeitet werden. Durch Kombination mit Vernetzern D) können dabei, je nach Reaktivität oder gegebenenfalls Blockierung der Vernetzer, sowohl Einkomponentenlacke als auch Zweikomponentenlacke hergestellt werden. Unter Einkomponentenlacken im Sinne der vorliegenden Erfindung sind dabei Überzugsmittel zu verstehen, bei denen Bindemittelkomponente und Vernetzerkomponente zusammen gelagert werden können, ohne dass eine Vernetzungsreaktion in merklichen bzw. für die spätere Applikation schädlichem Ausmaß stattfindet. Die Vernetzungsreaktion findet erst bei Applikation nach einer Aktivierung des Vernetzers statt. Diese Aktivierung kann z.B. durch Temperatursteigerung bewirkt werden. Unter Zweikomponentenlacken im Sinne der vorliegenden Erfindung versteht man Überzugsmittel, bei denen Bindemittelkomponente und Vernetzerkomponente aufgrund ihrer hohen Reaktivität in getrennten Gefäßen gelagert werden müssen. Die beiden Komponenten werden erst kurz vor Applikation gemischt und reagieren dann im Allgemeinen ohne zusätzliche Aktivierung. Zur Beschleunigung der Vernetzungsreaktion können aber auch Katalysatoren eingesetzt oder höhere Temperaturen angewendet werden.

Gegenstand der vorliegenden Erfindung sind daher auch wässrige Beschichtungsmittel enthaltend die erfindungsgemäßen wässrigen Zubereitungen sowie mindestens einen Vernetzer D).

Geeignete Vernetzer D) sind beispielsweise Polyisocyanat-Vernetzer, Amid- und Amin-Formaldehydharze, Phenolharze, Aldehyd- und Ketonharze.

Bevorzugte Vernetzer D) sind freie oder blockierte Polyisocyanate, welche gegebenenfalls hydrophil modifiziert sein können und/oder zu mindestens teilweise hydrophil-modifizierte, unblockierte Polyisocyanate.

Gegenstand der vorliegenden Erfindung sind ebenfalls wässrige Zweikomponenten(2K)-Beschichtungsmittel enthaltend die erfindungsgemäßen wässrigen Zubereitungen sowie ein Polyisocyanat. Bevorzugt ist das Polyisocyanat mindestens anteilig hydrophil-modifiziert.

Geeignete Polyisocyanate sind difunktionellen Isocyanaten wie z.B. Isophorondiisocyanat, Hexamethylendiisocyanat, 2,4- bzw. 2,6-Diisocyanatotoluol, 4.4'-Diphenylmethandiisocyanat und/oder deren höhermolekularen Trimere, Biurete, Urethane, Iminooxadiazindion und/oder Allophanate. Besonders bevorzugt ist der Einsatz niedrigviskoser, gegebenenfalls hydrophilierter, Polyisocyanate der vorstehend genannten Art auf Basis aliphatischer oder cycloaliphatischer Isocyanate.

Zur Blockierung werden die zuvor genannten Polyisocyanate mit Blockierungsmittel wie z.B. Methanol, Ethanol, Butanol, Hexanol, Benzylakohol, Acetoxim, Butanonoxim, Caprolactam, Phenol, Diethylmalonat, Dimethylmalonat, Dimethylpyrazol, Triazol, Dimethyltriazol, Acetessigester, Diisopropylamin, Dibutylamin, tert.-Butylbenzylamin, Cyclopentanoncarboxyethylester, Dicyclohexylamin und/oder tert.-Butylisopropylamin umgesetzt.

Die unblockierten und blockierten Polyisocyanate können auch durch Einbau hydrophiler Gruppen, wie z.B. Carboxylat-, Sulphonat- und/oder Polyethylenoxidstrukturen in eine wasserdispergierbare Form überführt werden und so in Kombination mit den erfmdungsgemäßen Zubereitungen eingesetzt werden. Die genannten blockierten Polyisocyanate können auch unter Mitverwendung hydroxy- bzw. aminofunktioneller, auch höhermolekularere Komponenten, wie z.B. Diole, Triole, Aminoalkohole, Polyester, Polyether, Polycarbonate und Mischungen der genannten und/oder anderer Rohstoffe hergestellt werden.

Die als Vernetzer D) eingesetzten Polyisocyanate weisen bei 23°C im Allgemeinen eine Viskosität von 10 bis 5 000 mPas auf und können auch falls zur Viskositätseinstellung gewünscht in Abmischung mit geringen Mengen an inerten Lösemitteln zum Einsatz gelangen.

Prinzipiell ist natürlich auch der Einsatz von Mischungen verschiedener Vernetzer D) möglich.

Vor, während oder nach der Herstellung der erfindungsgemäßen wässrigen Zubereitungen können die üblichen Hilfs- und Zusatzmittel der Lacktechnologie zugesetzt werden, wie z.B. Entschäumungsmittel, Verdickungsmittel, Pigmente, Dispergierhilfsmittel, Katalysatoren, Hautverhinderungsmittel, Antiabsetzmittel oder Emulgatoren.

Die wässrigen Beschichtungsmittel, enthaltend die erfindungsgemäßen Zubereitungen, eignen sich für alle Einsatzgebiete in denen wässrige Anstrich- und Beschichtungssysteme mit hohen Anforderungen an die Beständigkeit der Filme Verwendung finden, z.B. für die Beschichtung mineralischer Baustoff-Oberflächen, Lackierung und Versiegelung von Holz und Holzwerkstoffen, Beschichtung metallischer Oberflächen (Metallbeschichtung), Beschichtung und Lackierung asphalt- oder bitumenhaltiger Beläge, Lackierung und Versiegelung diverser Kunststoffoberflächen (Kunststoffbeschichtung) sowie Hochglanzlacke.

Die wässrigen Beschichtungsmittel, enthaltend die erfindungsgemäßen Zubereitungen, werden zur Herstellung von Grundierungen, Füller, pigmentierter oder transparenter Decklacke, Klarlacke und Hochglanzlacke sowie Einschichtlacke, die in der Einzel- und Serienapplikation, z.B. im Bereich der Industrielackierung, Automobil-Erst- und -Reparaturlackierung Anwendung finden können, eingesetzt.

Die Aushärtung der wässrigen Beschichtungsmittel, enthaltend die erfindungsgemäßen Zubereitungen, erfolgt dabei typischerweise bei Temperaturen von 0 bis 160°C, bevorzugt von 18 bis 130°C.

Diese Beschichtungen weisen bei sehr guter Filmoptik ein hohes Niveau in Kratzbeständigkeit, Lösemittel- und Chemikalienbeständigkeit, gute Wetterbeständigkeit, hohe Härte und schnelle Trocknung auf.

Die Herstellung der Beschichtungen kann nach den unterschiedlichen Spritzverfahren wie beispielsweise pneumatisch, airless oder Elektrostatik-Spritzverfahren unter Verwendung von Ein-oder gegebenenfalls Zweikomponenten-Spritzanlagen erfolgen. Die Lacke und Beschichtungsmittel, enthaltend die erfindungsgemäßen wässrigen Beschichtungsmittel, können jedoch auch nach anderen Methoden, beispielsweise durch Streichen, Rollen oder Rakeln appliziert werden.

### Beispiele

Soweit nicht abweichend vermerkt, sind die Prozentangaben als Gewichtsprozent zu verstehen.

Die Bestimmung der Hydroxylzahl (OH-Zahl) erfolgte gemäß DIN 53240-2.

Die Viskositätsbestimmung erfolgte mittels Rotationsviskosimeter "Paar Physica MCR51" gemäß DIN EN ISO 3219.

Die Bestimmung der Säurezahl erfolgte gemäß DIN EN ISO 2114.

### Bestimmung der Teilchengröße

Die Teilchengrößen wurden mittels Dynamischer Lichtstreuuung mit einem HPPS particle size analyzer (Fa. Malvern, Worcestershire, UK) bestimmt. Die Auswertung erfolgte über die Dispersion Technology Software 4,10. Um Mehrfachstreuung zu vermeiden wurde eine hochverdünnte Dispersion der Nanopartikel hergestellt. Ein Tropfen einer verdünnten Nanopartikeldispersion (ca. 0,1 - 10 %) wurde in eine Küvette enthaltend ca. 2 ml des gleichen Lösemittels wie die Dispersion gegeben, geschüttelt und im HPPS analyzer bei 20 bis 25 °C vermessen. Wie dem Fachmann allgemein bekannt, wurden vorher die relevanten Parameter des Dispergiermediums - Temperatur, Viskosität und Brechungsindex - in die Software eingegeben. Im Falle organischer Lösemittel wurde eine Glasküvette eingesetzt. Als Resultat wurde eine Intensitäts- bzw. Volumen- Teilchendurchmesser-Kurve sowie der Z-Mittelwert für den Teilchendurchmesser erhalten. Es wurde darauf geachtet, dass der Polydispersitätsindex < 0,5 war.
- Bayhydur^{®} XP 2655:: hydrophiles, aliphatisches Polyisocyanat auf Basis Hexamethylendiisocyanat, Isocyanatgehalt: 21,2 ± 0,5% (Bayer MaterialScience AG/Leverkusen, Deutschland)
- Bindzil^{®} CC40:: 40%ig kolloid-disperses, oberflächenmodifiziertes Siliziumdioxid in Wasser, mittlere Teilchengröße 12 nm (EKA Chemical AB, Bohus, Schweden)
- Byk^{®} 325:: Verlaufhilfsmittel (Byk-Chemie GmbH, Wesel, Deutschland)
- Byk^{®} 345:: Benetzungsadditiv (Byk-Chemie GmbH, Wesel, Deutschland)
- Desmodur^{®} XP 2410:: aliphatisches Polyisocyanate, Isocyanatgehalt: 23,5 ± 0,5% (Bayer MaterialScience AG/Leverkusen, Deutschland)
- Dowanol^{®} PnB:: Lösemittel (Dow Chem. Comp., Horgen, Schweiz)
- Rhodiasolv^{®} RPDE:: Lösemittel (Rhodia Syntech GmbH, Frankfurt a. M., Deutschland)
- CoatOsil^{®} 2810:: Epoxyfunktionelles Polydimethylsiloxan, Epoxidgehalt 11,4 % (Momentive Performance Materials, Leverkusen, DE)
- CoatOsil^{®} 1706:: Vinyltrisisopropoxysilan (Momentive Performance Materials, Leverkusen, DE)

### Beispiel 1 hydroxvfunktionelles Polydimethylsiloxan

Entsprechend WO 2007/025670 (Herstellung Polyol I, S. 14) wurden 770 g des epoxyfunktionellen Polydiemethylsiloxans CoatOsil^{®} 2810 vorgelegt, auf 80 °C vorgeheizt und mit 231 g Diethanolamin versetzt. Diese Mischung wurde anschließend 2 Stunden bei 100°C gerührt. Das Produkt hatte einen Epoxidgehalt < 0,01 %, eine OH-Zahl von ca. 365 mg KOH/g (11,1 %) und eine Viskosität bei 23°C von ca. 2900 mPas.

### Beispiel 2 Versleiehsbeispiel

In einem 5 1-Reaktionsgefäß mit Rühr-, Kühl- und Heizvorrichtung wurden 220 g Dowanol^{®} PnB vorgelegt und auf 138°C aufgeheizt. Bei dieser Temperatur wurde innerhalb 30 Minuten eine Mischung 1) aus 4 g Di-tert.-butylperoxid in 4 g Dowanol^{®} PnB zugetropft. Unmittelbar anschließend wurde eine Mischung 2) aus 298,3 g i-Bornylmethacrylat, 292,0 g Hydroxyethylacrylat, 169,8 g Butylmethacrylat, 139 g Styrol und 90,4 g 2-Ethylhexylacrylat in 3,5 Stunden und unmittelbar anschließend eine Mischung 3) aus 63,8 g Styrol, 90 g Hydroxyethylacrylat, 50 g Butylacrylat und 28,7 g Methacrylsäure in 1,5 Stunden zudosiert. Parallel zu Mischung 2) und 3) wurde innerhalb von 5 Stunden eine Mischung 4) aus 14,5 g Di-tert.-butylperoxid in 14,5 g Dowanol^{®} PnB zudosiert. Anschließend wurde innerhalb von 1 Stunde eine Mischung 5) aus 4 g Di-tert.-butylperoxid in 4 g Dowanol^{®} PnB zudosiert. Anschließend wurde auf 100°C abgekühlt und 31,2 g N,N-Dimethyethanolamin zugegeben. Nach 30 Minuten Homogenisieren wurde innerhalb von 2 Stunden bei 80°C mit 1245 g Wasser dispergiert. Es wurde eine Copolymerisat-Dispersion mit folgenden Daten erhalten:

| | |
|---|---|
| OH-Gehalt (berechnet auf Festkörper) | 4,5 % |
| Säurezahl (auf Festkörper) | 18,6 mg KOH/g |
| Festkörpergehalt | 44,9 % |
| Viskosität | 2050 mPas_{23°C} |
| pH-Wert (10 %ig in Wasser) | 8,0 |
| Neutralisationsgrad | 105% |
| Mittlere Teilchengröße | 105 nm |
| Cosolvens | 7,4 Gew.-% |

### Beispiel 3 erfingdungsgemäß

In einem 5 1-Reaktionsgefäß mit Rühr-, Kühl- und Heizvorrichtung wurden 220 g Dowanol^{®} PnB vorgelegt und auf 138°C aufgeheizt. Bei dieser Temperatur wurde innerhalb 30 Minuten eine Mischung 1) aus 4 g Di-tert.-butylperoxid in 4 g Dowanol^{®} PnB zugetropft. Unmittelbar anschließend wurde eine Mischung 2) aus 298,3 g i-Bornylmethacrylat, 292,0 g Hydroxyethylacrylat, 169,8 g Butylmethacrylat, 126,5 g Styrol, 90,4 g 2-Ethylhexylacrylat und 12,5 g Vinyltrisisopropoxysilan (CoatOSil^{®} 1706) in 3,5 Stunden und unmittelbar anschließend eine Mischung 3) aus 63,8 g Styrol, 90 g Hydroxyethylacrylat, 50 g Butylacrylat und 28,7 g Methacrylsäure in 1,5 Stunden zudosiert. Parallel zu Mischung 2) und 3) wurde innerhalb von 5 Stunden eine Mischung 4) aus 14,5 g Di-tert.-butylperoxid in 14,5 g Dowanol^{®} PnB zudosiert. Anschließend wurde innerhalb von 1 Stunde eine Mischung 5) aus 4 g Di-tert.-butylperoxid in 4 g Dowanol^{®} PnB zudosiert. Anschließend wurde auf 100°C abgekühlt und 31,2 g N,N-Dimethyethanolamin und 12,5 g hydroxyfunktionelles Polydimethylsiloxan Beispiel 1 zugegeben. Nach 30 Minuten Homogenisieren wurde innerhalb von 2 Stunden bei 80°C mit 1260 g Wasser dispergiert. Es wurde eine Copolymerisat-Dispersion mit folgenden Daten erhalten:

| | |
|---|---|
| OH-Gehalt (berechnet auf Festkörper) | 4,6 % |
| Säurezahl (Festkörper) | 20,1 mg KOH/g |
| Festkörpergehalt | 40,2 % |
| Viskosität | 1800 mPas_{23°C} |
| pH-Wert (10 %ig in Wasser) | 8,0 |
| Neutralisationsgrad | 105% |
| Mittlere Teilchengröße | 160 nm |
| Cosolvens: | 7,2 Gew.-% |

### Beispiel 4 erfindungsgemäß

In einem 5 1-Reaktionsgefäß mit Rühr-, Kühl- und Heizvorrichtung wurden 220 g Dowanol^{®} PnB vorgelegt und auf 138°C aufgeheizt. Bei dieser Temperatur wurde innerhalb 30 Minuten eine Mischung 1) aus 4 g Di-tert.-butylperoxid in 4 g Dowanol^{®} PnB zugetropft. Unmittelbar anschließend wurde eine Mischung 2) aus 298,3 g i-Bornylmethacrylat, 292,0 g Hydroxyethylacrylat, 169,8 g Butylmethacrylat, 126,5 g Styrol, 90,4 g 2-Ethylhexylacrylat und 12,5 g Vinyltrisisopropoxysilan (CoatOSil^{®} 1706) in 3,5 Stunden und unmittelbar anschließend eine Mischung 3) aus 63,8 g Styrol, 90 g Hydroxyethylacrylat, 50 g Butylacrylat und 28,7 g Methacrylsäure in 1,5 Stunden zudosiert. Parallel zu Mischung 2) und 3) wurde innerhalb von 5 Stunden eine Mischung 4) aus 14,5 g Di-tert.-butylperoxid in 14,5 g Dowanol^{®} PnB zudosiert. Anschließend wurde innerhalb von 1 Stunde eine Mischung 5) aus 4 g Di-tert.-butylperoxid in 4 g Dowanol^{®} PnB zudosiert. Anschließend wurde auf 100°C abgekühlt und 31,2 g N,N-Dimethyethanolamin und 12,5 g hydroxyfunktionelles Polydimethylsiloxan Beispiel 1 zugegeben. Nach 30 Minuten Homogenisieren wurde innerhalb von 2 Stunden bei 80°C mit einer Mischung aus 875 g Bindzil^{®} CC40 und 1575 g Wasser dispergiert. Es wurde eine Copolymerisat-Dispersion mit folgenden Daten erhalten:

| | |
|---|---|
| OH-Gehalt (berechnet auf Festkörper) | 3,6 % |
| Säurezahl (Festkörper) | 24,0 mg KOH/g |
| Festkörpergehalt | 40,4 % |
| Viskosität | 1460 mPas_{23°C} |
| pH-Wert (10 %ig in Wasser) | 8,7 |
| Neutralisationsgrad | 105% |
| Mittlere Teilchengröße | 145 nm |
| Cosolvens: | 6,1 Gew.-% |
| SiO₂-Nanopartikel | 8,8 Gew.-% |

**Beispiel 5 Anwendung Klarlack**

| | A | B | C | D* | E* |
|---|---|---|---|---|---|
| Beispiel 2 [Gew.-Tle.] | 340,0 | | 340,0 | | |
| Beispiel 3 [Gew.-Tle.] | | 371,5 | | 371,5 | |
| Beispiel 4 [Gew.-Tle.] | | | | | 472,0 |
| Byk^{®} 345 [Gew.-Tle.] | 2,8 | 2,8 | 3,3 | 3,2 | 3,2 |
| Byk^{®} 325 [Gew.-Tle.] | 0,9 | 0,9 | 1,0 | 1,0 | 1,0 |
| Bindzil^{®} CC40 [Gew.-Tle.] | | | 105,5 | 105,5 | |
| Wasser [Gew.-Tle.] | 70,4 | 35,6 | 50,9 | 12,5 | 15,9 |
| Desmodur^{®} XP 2410 [Gew.-Tle.] | 74,6 | 74,6 | 74,6 | 74,6 | 74,6 |
| Bayhydur^{®} XP 2655 [Gew.-Tle.] | 21,3 | 21,3 | 21,3 | 21,3 | 21,3 |
| Lacktechnische Eigenschaften | | | | | |
| SiO₂-Nanopartikel auf Lackharz [Gew.-%] | 0 | 0 | 14,5 | 14,5 | 14,5 |
| Glanz (20°) | 87 | 87 | 81 | 86 | 88 |
| Haze (60°) | 9,5 | 9,5 | 45 | 9,5 | 9,0 |
| Kratzfestigkeit [Restglanz %] | 30 | 45 | 65 | 78 | 87 |

| | | | | | |
|---|---|---|---|---|---|
| *erfindungsgemäß | | | | | |

### Glanz und Glanzschleier (Haze)

Die Glanzmessung erfolgte nach DIN EN ISO 2813. Je höher der Glanzmesswert ist, desto besser ist der Glanz. Die Messung des Glanzschleiers (Haze) erfolgte gemäß DIN EN ISO 13803. Je niedriger der Haze-Wert, desto klarer der Lack.

### Kratzfestigkeit

Die Kratzfestigkeitsprüftmg der hergestellten Klarlacke erfolgte gemäß DIN 55668.
Der relative Restglanz in % gibt wider, wie hoch der Glanzgrad [20°] nach Verkratzung gemäß DIN 5668 im Vergleich zum Glanzgrad vor Verkratzung liegt. Je höher dieser Wert ist, desto besser ist die Kratzfestigkeit.

Wie die Beispiele 5 A bis E klar zeigen, zeichnen sich die erfindungsgemäßen Zubereitungen D und E durch deutlich höhere Kratzbeständigkeit bei Erhalt der guten optischen Eigenschaften insbesonder niedrigem Glanzschleier (Haze) aus.

## Patentansprüche

1. Wässrige Zubereitungen enthaltend
A) ein Silan-modifiziertes Copolymerisat a1) und hydroxylgruppenhaltige Polyorganosiloxane a2),
B) anorganische Partikel, welche gegebenenfalls oberflächenmodifiziert sind, mit einer mittels dynamischer Lichtstreuung in Dispersion bestimmten mittleren Partikelgröße (Z-Mittelwert) von kleiner als 200 nm sowie
C) Wasser.

2. Wässrige Zubereitungen gemäß Anspruch 1, **dadurch gekennzeichnet, dass** das Silanmodifizierte Copolymerisat a1) Gruppen der allgemeinen Formel (1)
-Si(R¹O)₂R² (1)
in welcher
R¹ ein C₂- bis C₈-Alkylrest ist und
R² gleich (R¹O) oder ein C₁- bis C₅-Alkylrest ist,
enthält.

3. Wässrige Zubereitungen gemäß Anspruch 1, **dadurch gekennzeichnet, dass** Komponente a1) ein Copolymerisat ist, das aufgebaut ist aus
I) einem hydroxyfunktionellen, hydrophoben Polymerisat, enthaltend als Aufbaumonomere
Ia) (Meth)-acrylsäweester mit C₁- bis C₁₈-Kohlenwasserstoffresten im Alkoholteil und/oder Vinylaromaten und/oder Vinylester,
Ib) hydroxyfunktionelle Monomere und
IS1) Silan-funktionelle, zur Polymerisation befähigte Monomere sowie
II) einem hydroxyfunktionellen, hydrophilen Polymerisat, enthaltend als Aufbaukomponenten
IIa) (Meth)-acrylsäureester mit C₁- bis C₁₈-Kohlenwasserstoffresten im Alkoholteil und/oder Vinylaromaten und/oder Vinylester,
IIb) hydroxyfunktionelle Monomere und
IIc) säurefunktionelle Monomere.

4. Wässrige Zubereitungen gemäß Anspruch 1, **dadurch gekennzeichnet, dass** Komponente a1) ein Copolymerisat ist, das aufgebaut ist aus
I) einem hydroxyfunktionellen, hydrophoben Polymerisat, enthaltend als Aufbaumonomere
Ia) (Meth)-acrylsäureester mit C₁- bis C₁₈-Kohlenwasserstoffresten im Alkoholteil und/oder Vinylaromaten und/oder Vinylester,
Ib) hydroxyfunktionelle Monomere sowie
II) In einem hydroxyfunktionellen, hydrophilen Polymerisat, enthaltend als Aufbaukomponenten
IIa) (Meth)-acrylsäureester mit C₁- bis C₁₈-Kohlenwasserstoffresten im Alkoholteil und/oder Vinylaromaten und/oder Vinylester,
IIb) hydroxyfunktionelle Monomere,
IIc) säurefunlctionelle Monomere und
IIS1) Silan-funktionelle, zur Polymerisation befähigte Monomere.

5. Wässrige Zubereitungen gemäß Anspruch 3 und 4, **dadurch gekennzeichnet, dass** Silanfunktionelle, zur Polymerisation befähigte Monomere IS1) sowie IIS1) Verbindungen der allgemeinen Formel (2)
(R¹O)₂R²Si-(CH=CH₂) (2)
in welcher
R¹ ein C₂- bis C₈-Alkylrest ist,
R² gleich (R¹O) oder ein C₁- bis C₅-Alkylrest ist,
und/oder Verbindungen der allgemeinen Formel (3)
(R¹O)₂R²Si(CH₂)ₘ-O(CO)-(CR³=CH₂) (3)
in welcher
R¹ ein C₂- bis C₈-Alkylrest ist,
R² gleich (R¹O) oder ein C₁- bis C₅-Alkylrest ist,
R³ gleich H oder CH₃ ist und
m 1 bis 4 ist,
sind.

6. Wässrige Zubereitungen gemäß Anspruch 3 und 4, **dadurch gekennzeichnet, dass** Silanfunktionelle, zur Polymerisation befähigte Monomere IS1) sowie IIS1) ausgewählt sind aus der Gruppe Vinyltriethoxysilan, Vinyltrisisopropoxysilan, Vinyl-tris-(2-methoxythoxy)silan, Vinylmethyldiethoxysilan, Vinylmethyldiisopropoxysilan, Vinylethyldiethoxysilan, 3-(Triethoxysilyl)-propylmethacrylat oder 3-(Tris-isopropoxysilyl)-propylmethacrylat, Vinylphenyldiethoxysilan, Vinylphenylmethylethoxysilan oder Vinyltri-t-butoxysilan

7. Wässrige Zubereitungen gemäß Anspruch 1, **dadurch gekennzeichnet, dass** Komponente a1) ein Copolymerisat ist, das aufgebaut ist aus
I) einem hydroxyfunktionellen, hydrophoben Polymerisat, enthaltend als Aufbaumonomere
Ia) (Meth)-acrylsäureester mit C₁- bis C₁₈-Kohlenwasserstoffresten im Alkoholteil und/oder Vinylaromaten und/oder Vinylester,
Ib) hydroxyfunktionelle Monomere,
II) einem hydroxyfunktionellen, hydrophilen Polymerisat, enthaltend als Aufbaukomponenten
IIa) (Meth)-acrylsäureester mit C₁- bis C₁₈-Kohlenwasserstoffresten im Alkoholteil und/oder Vinylaromaten und/oder Vinylester,
IIb) hydroxyfunktionelle Monomere,
IIc) säurefunktionelle Monomere und
IIS2) Monomere, welche neben Silan-Gruppen mindestens eine Epoxid-Funktion enthalten.

8. Wässrige Zubereitungen gemäß Anspruch 7, **dadurch gekennzeichnet, dass** Monomere IIS2) ausgewählt sind aus der Gruppe γ-Glycidoxypropyltriethoxysilan, γ-Glycidoxypropyl-tris-isopropoxysilan, γ-Glycidoxypropyl-diethoxy-methylsilan, β-(3,4-Epoxycyclohexyl)-triethoxysilan oder β-(3,4-Epoxycyclohexyl)-tris-isopropoxysilan.

9. Wässrige Zubereitungen gemäß Anspruch 1, **dadurch gekennzeichnet, dass** hydroxylgruppenhaltige Polyorganosiloxane a2) Verbindungen der der allgemeinen Formel (I), 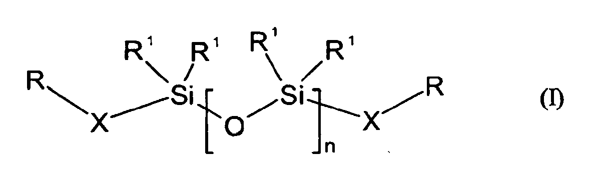 sind, in welcher
X ein aliphatischer, gegebenenfalls verzweigter C₁- bis C₁₀-Rest oder eine [-CH₂-O-(CH₂)ₚ-]Si Einheit mit r = 1 bis 4, bevorzugt mit r = 3 ist,
R eine -CH(OH)Y Gruppe ist, in welcher
Y eine -CH₂-N(R²R³) Gruppe ist, wobei
R² ein H, ein Methyl-, Ethyl-, n-Propyl-, iso-Propyl-, Cyclohexylrest, ein 2-Hydroxyethyl-, 2-Hydroxypropyl-, 3-Hydroxypropyl-rest sein kann und
R³ ein 2-Hydroxyethyl-, 2-Hydroxypropyl-, 3-Hydroxypropyl-rest sein kann,
R¹ gleich oder verschieden sein kann und Wasserstoff oder ein gegebenenfalls heteroatomhaltiger C₁- bis C₁₀-Kohlenwasserstoffrest ist und
n 1 bis 40 ist.

10. Wässrige Zubereitungen gemäß Anspruch 1, **dadurch gekennzeichnet, dass** hydroxylgruppenhaltige Polyorganosiloxane a2) Verbindungen der allgemeinen Formel (V), 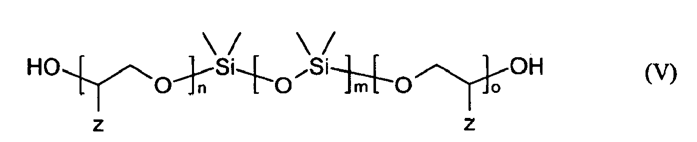 sind, in welcher
m 5 bis 15,
Z H oder Methyl und
n, o 1 bis 12 ist.

11. Wässrige Zubereitungen gemäß Anspruch 1, **dadurch gekennzeichnet, dass** hydroxylgruppenhaltige Polyorganosiloxane a2) Verbindungen der allgemeinen Formel (VI), 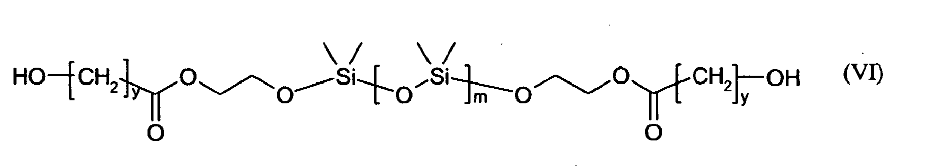 sind, in welcher
m = 5 bis 15 und
y = 2 bis 4 sein kann.

12. Wässrige Zubereitungen gemäß Anspruch 1, **dadurch gekennzeichnet, dass** die Komponente a2) entsprechend der allgemeinen Formel (I) ein zahlenmittleres Molekulargewicht von 200 bis 3000 g/mol und eine mittlere OH-Funktionalität von ≥ 1,8 aufweist.

13. Wässrige Zubereitungen gemäß Anspruch 1, **dadurch gekennzeichnet, dass** die Komponente a2) entsprechend der allgemeinen Formel (I) ein zahlenmittleres Molekulargewicht von 250 bis 2250 g/mol aufweist.

14. Wässrige Zubereitungen gemäß Anspruch 1, **dadurch gekennzeichnet, dass** Komponente B) Partikel sind ausgewählt aus der Gruppe der anorganischen Oxide, Mischoxide, Carbide, Boride und Nitride von Elementen der II bis IV Hauptgruppe und/oder Elemente der I bis VIII Nebengruppe des Periodensystems einschließlich der Lanthanide.

15. Wässrige Zubereitungen gemäß Anspruch 1, **dadurch gekennzeichnet, dass** Komponente B) anorganische Nanopartikel B) in kolloid disperser Form in organischen Lösungsmitteln (Organosole) oder in Wasser sind.

16. Wässrige Zubereitungen gemäß Anspruch 1, **dadurch gekennzeichnet, dass** Komponente B) anorganische Partikel in Form ihrer wässriger Zubereitungen sind.

17. Wässrige Zubereitungen gemäß Anspruch 1, **dadurch gekennzeichnet, dass** Komponente B) oberflächenmodifizierte, anorganische Nanopartikel sind.

18. Wässrige Beschichtungsmittel enthaltend die wässrigen Zubereitungen gemäß Anspruch 1 sowie mindestens einen Vernetzer D).

19. Wässrige Zweikomponenten(2K)-Beschichtungsmittel enthaltend wässrige Zubereitungen gemäß Anspruch 1 sowie ein Polyisocyanat.

20. Verwendung der wässrigen Zubereitungen gemäß Anspruch 1 zur Herstellung von Klarlacken.

## Claims

1. Aqueous formulations comprising
A) a silane-modified copolymer a1) and polyorganosiloxanes a2) containing hydroxyl groups,
B) inorganic particles which are optionally surface-modified and have an average particle size (z-mean), determined by means of dynamic light scattering in dispersion, of less than 200 nm and
C) water.

2. Aqueous formulations according to claim 1, **characterized in that** the silane-modified copolymer a1) contains groups of the general formula (1)
-Si(R¹O)₂R² (1)
in which
R¹ is a C₂- to C₈-alkyl radical and
R² is (R¹O) or a C₁- to C₅-alkyl radical.

3. Aqueous formulations according to claim 1, **characterized in that** component a1) is a copolymer which is built up from
I) a hydroxy-functional hydrophobic polymer containing as builder monomers
Ia) (meth)acrylic acid esters having C₁- to de-hydrocarbon radicals in the alcohol part and/or vinylaromatics and/or vinyl esters,
Ib) hydroxy-functional monomers and
IS1) silane-functional monomers which are capable of polymerization, and
II) a hydroxy-functional hydrophilic polymer containing as builder components
IIa) (meth)acrylic acid esters having C₁- to C₁₈-hydrocarbon radicals in the alcohol part and/or vinylaromatics and/or vinyl esters,
IIb) hydroxy-functional monomers and
IIc) acid-functional monomers.

4. Aqueous formulations according to claim 1, **characterized in that** component a1) is a copolymer which is built up from
I) a hydroxy-functional hydrophobic polymer containing as builder monomers
Ia) (meth)acrylic acid esters having C₁- to C₁₈-hydrocarbon radicals in the alcohol part and/or vinylaromatics and/or vinyl esters,
Ib) hydroxy-functional monomers and
II) a hydroxy-functional hydrophilic polymer containing as builder components
IIa) (meth)acrylic acid esters having C₁- to C₁₈-hydrocarbon radicals in the alcohol part and/or vinylaromatics and/or vinyl esters,
IIb) hydroxy-functional monomers,
IIc) acid-functional monomers and
IIS1) silane-functional monomers which are capable of polymerization.

5. Aqueous formulations according to claim 3 and 4, **characterized in that** silane-functional monomers IS1) and IIS1) which are capable of polymerization are compounds of the general formula (2)
(R¹O)₂R²Si-(CH=CH₂) (2)
in which
R¹ is a C₂- to C₈-alkyl radical,
R² is (R¹O) or a C₁- to C₅-alkyl radical,
and/or compounds of the general formula (3)
(R¹O) ₂R²Si(CH₂)m-O(CO)-(CR³=CH₂) (3)
in which
R¹ is a C₂- to C₈-alkyl radical,
R² is (R¹O) or a C₁- to C₅-alkyl radical,
R³ is H or CH₃ and
m is 1 to 4.

6. Aqueous formulations according to claim 3 and 4, **characterized in that** silane-functional monomers IS1) and IIS1) which are capable of polymerization are chosen from the group of vinyltriethoxysilane, vinyltrisisopropoxysilane, vinyl-tris-(2-methoxyethoxy)silane, vinylmethyldiethoxysilane, vinylmethyldiisopropoxysilane, vinylethyldiethoxysilane, 3-(triethoxysilyl)-propyl methacrylate or 3-(tris-isopropoxysilyl)-propyl methacrylate, vinylphenyldiethoxysilane, vinylphenylmethylethoxysilane or vinyltri-t-butoxysilane.

7. Aqueous formulations according to claim 1, **characterized in that** component a1) is a copolymer which is built up from
I) a hydroxy-functional hydrophobic polymer containing as builder monomers
Ia) (meth) acrylic acid esters having C₁- to C₁₈-hydrocarbon radicals in the alcohol part and/or vinylaromatics and/or vinyl esters,
Ib) hydroxy-functional monomers and
II) a hydroxy-functional hydrophilic polymer containing as builder components
IIa) (meth)acrylic acid esters having C₁- to C₁₈-hydrocarbon radicals in the alcohol part and/or vinylaromatics and/or vinyl esters,
IIb) hydroxy-functional monomers,
IIc) acid-functional monomers and
IIS2) monomers which contain at least one epoxide function in addition to silane groups.

8. Aqueous formulations according to claim 7, **characterized in that** the monomers IIS2) are chosen from the group of Y-glycidoxypropyltriethoxysilane, γ-glycidoxypropyl-tris-isopropoxysilane, γ-glycidoxypropyl-diethoxymethylsilane, β-(3,4-epoxycyclohexyl)-triethoxysilane or β-(3,4-epoxycyclohexyl)-tris-isopropoxysilane.

9. Aqueous formulations according to claim 1, **characterized in that** the polyorganosiloxanes a2) containing hydroxyl groups are compounds of the general formula (I) 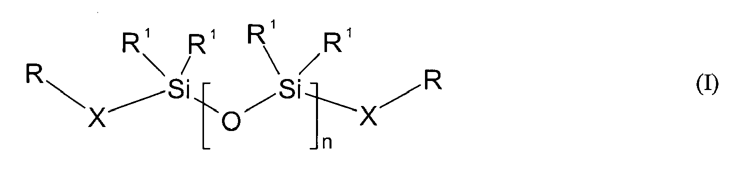 in which
X is an aliphatic, optionally branched C₁ to C₁₀ radical or
a [-CH₂-O- (CH₂)ₚ-] Si unit, where r = 1 to 4, preferably where r = 3,
R is a -CH(OH)Y group, in which
Y is a -CH₂-N (R²R³) group, wherein
R² can be an H,
a methyl, ethyl, n-propyl, isopropyl or cyclohexyl radical or a 2-hydroxyethyl, 2-hydroxypropyl or 3-hydroxypropyl radical and
R³ can be a 2-hydroxyethyl, 2-hydroxypropyl or 3-hydroxypropyl radical,
R¹ can be identical or different and is hydrogen or a C₁- to C₁₀-hydrocarbon radical optionally containing hetero atoms and
n is 1 to 40.

10. Aqueous formulations according to claim 1, **characterized in that** the polyorganosiloxanes a2) containing hydroxyl groups are compounds of the general formula (V) 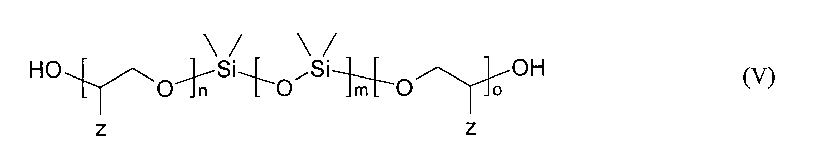 in which
m is 5 to 15,
Z is H or methyl and
n, o is 1 to 12.

11. Aqueous formulations according to claim 1, **characterized in that** the polyorganosiloxanes a2) containing hydroxyl groups are compounds of the general formula (VI) 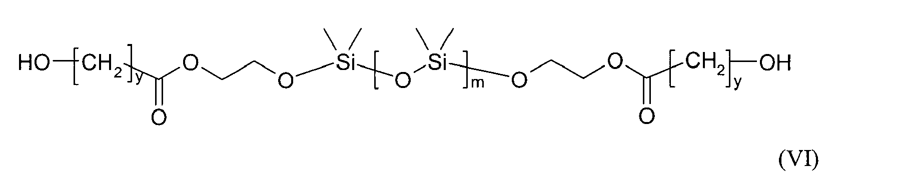 in which
m can be 5 to 15 and
y can be 2 to 4.

12. Aqueous formulations according to claim 1, **characterized in that** component a2) corresponding to the general formula (I) has a number-average molecular weight of from 200 to 3,000 g/mol and an average OH functionality of ≥ 1.8.

13. Aqueous formulations according to claim 1, **characterized in that** component a2) corresponding to the general formula (I) has a number-average molecular weight of from 250 to 2,250 g/mol.

14. Aqueous formulations according to claim 1, **characterized in that** component B) particles are chosen from the group of inorganic oxides, mixed oxides, carbides, borides and nitrides of elements of main group II to IV and/or elements of subgroup I to VIII of the periodic table, including the lanthanides.

15. Aqueous formulations according to claim 1, **characterized in that** component B) is inorganic nanoparticles in colloidally disperse form in organic solvents (organosols) or in water.

16. Aqueous formulations according to claim 1, **characterized in that** component B) is inorganic particles in the form of their aqueous formulations.

17. Aqueous formulations according to claim 1, **characterized in that** component B) is surface-modified inorganic nanoparticles.

18. Aqueous coating compositions comprising the aqueous formulations according to claim 1 and at least one crosslinking agent D).

19. Aqueous two-component (2C) coating compositions comprising aqueous formulations according to claim 1 and a polyisocyanate.

20. Use of the aqueous formulations according to claim 1 for the preparation of clear lacquers.

## Revendications

1. Préparations aqueuses contenant
A) un copolymérisat modifié avec un silane a1) et des polyorganosiloxanes contenant des groupes hydroxy a2),
B) des particules inorganiques, qui sont éventuellement modifiées en surface, ayant une taille de particule (moyenne Z), déterminée en dispersion par diffusion dynamique de la lumière, de moins de 200 nm ainsi que
C) de l'eau

2. Préparations aqueuses selon la revendication 1, **caractérisées en ce que** le copolymérisat modifié avec un silane a1) contient des groupes de formule générale (1)
-Si(R¹O)₂R² (1)
dans laquelle
R¹ est un radical alkyle en C₂-C₈ et
R² représente (R¹O) ou un radical alkyle en C₁-C₅.

3. Préparations aqueuses selon la revendication 1, **caractérisées en ce que** le composant a1) est un copolymérisat qui est constitué
I) d'un polymérisat hydrophobe à fonction hydroxy, contenant en tant que monomères structuraux
Ia) des esters d'acide (méth)acrylique comportant des radicaux hydrocarbonés en C₁-C₁₈ dans le fragment alcool et/ou des composés vinylaromatiques et/ou des esters vinyliques,
Ib) des monomères à fonction hydroxy et
IS1) des monomères à fonction silane, aptes à la polymérisation ainsi que
II) d'un polymérisat hydrophile à fonction hydroxy, contenant en tant que composants structuraux
IIa) des esters d'acide (méth)acrylique comportant des radicaux hydrocarbonés en C₁-C₁₈ dans le fragment alcool et/ou des composés vinylaromatiques et/ou des esters vinyliques,
IIb) des monomères à fonction hydroxy et
IIc) des monomères à fonction acide.

4. Préparations aqueuses selon la revendication 1, **caractérisées en ce que** le composant a1) est un copolymérisat qui est constitué
I) d'un polymérisat hydrophobe à fonction hydroxy, contenant en tant que monomères structuraux
Ia) des esters d'acide (méth)acrylique comportant des radicaux hydrocarbonés en C₁-C₁₈ dans le fragment alcool et/ou des composés vinylaromatiques et/ou des esters vinyliques,
Ib) des monomères à fonction hydroxy ainsi que
II) d'un polymérisat hydrophile à fonction hydroxy, contenant en tant que composants structuraux
IIa) des esters d'acide (méth)acrylique comportant des radicaux hydrocarbonés en C₁-C₁₈ dans le fragment alcool et/ou des composés vinylaromatiques et/ou des esters vinyliques,
IIb) des monomères à fonction hydroxy,
IIc) des monomères à fonction acide et
IIS1) des monomères à fonction silane, aptes à la polymérisation.

5. Préparations aqueuses selon la revendication 3 et la revendication 4, **caractérisées en ce que** les monomères à fonction silane, aptes à la polymérisation, IS1) ainsi que IIS1) sont des composés de formule générale (2)
(R¹O)₂R₂Si-(CH=CH₂) (2)
dans laquelle
R¹ est un radical alkyle en C₂-C₈,
R² représente (R¹O) ou un radical alkyle en C₁-C₅,
et/ou des composés de formule générale (3)
(R¹⁰)₂R²Si (CH₂)ₘ-O(CO)-(CR³=CH₂) (3)
dans laquelle
R¹ est un radical alkyle en C₂-C₈ et
R² représente (R¹O) ou un radical alkyle en C₁-C₅,
R³ représente H ou CH₃ et
m vaut de 1 à 4.

6. Préparations aqueuses selon la revendication 3 et la revendication 4, **caractérisées en ce que** les monomères à fonction silane, aptes à la polymérisation, IS1) ainsi que IIS1) sont choisis dans le groupe constitué par le vinyltriéthoxysilane, le vinyltrisisopropoxysilane, le vinyl-tris-(2-méthoxyéthoxy)-silane, le vinylméthyldiéthoxysilane, le vinylméthyldiisopropoxysilane, le vinyléthyldiéthoxysilane, le méthacrylate de 3-(triéthoxysilyl)-propyle ou le méthacrylate de 3-(tris-isopropoxysilyl)-propyle, le vinylphényldiéthoxysilane, le vinylphénylméthyléthoxysilane ou le vinyltri-tert-butoxysilane.

7. Préparations aqueuses selon la revendication 1, **caractérisées en ce que** le composant a1) est un copolymérisat qui est constitué
I) d'un polymérisat hydrophobe à fonction hydroxy, contenant en tant que monomères structuraux
Ia) des esters d'acide (méth)acrylique comportant des radicaux hydrocarbonés en C₁-C₁₈ dans le fragment alcool et/ou des composés vinylaromatiques et/ou des esters vinyliques,
Ib) des monomères à fonction hydroxy et
II) d'un polymérisat hydrophile à fonction hydroxy, contenant en tant que composants structuraux
IIa) des esters d'acide (méth)acrylique comportant des radicaux hydrocarbonés en C₁-C₁₈ dans le fragment alcool et/ou des composés vinylaromatiques et/ou des esters vinyliques,
IIb) des monomères à fonction hydroxy,
IIc) des monomères à fonction acide et
IIS2)des monomères qui en plus de groupes silane contiennent au moins une fonction époxyde.

8. Préparations aqueuses selon la revendication 7, **caractérisées en ce que** les monomères IIS2) sont choisis dans le groupe constitué par le γ-glycidoxypropyltriéthoxysilane, le γ-glycidoxypropyl-tris-isopropoxysilane, le γ-glycidoxypropyl-diéthoxyméthylsilane, le β-(3,4-époxycyclohexyl)-triéthoxysilane ou le β-(3,4-époxycyclohexyl)-tris-isopropoxysilane.

9. Préparations aqueuses selon la revendication 1, **caractérisées en ce que** les polyorganosiloxanes contenant des groupes hydroxy a2) sont des composés de formule générale (I), 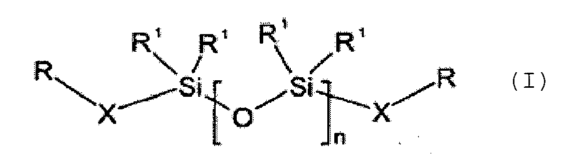 dans laquelle
X est un radical aliphatique, éventuellement ramifié, en C₁-C₁₀ ou
une unité [-CH₂-O-(CH₂)ₚ-]Si, où r = 1 à 4, de préférence ou r = 3,
R est un groupe -CH(OH)Y, dans lequel
Y est un groupe -CH₂-N (R²R³), où
R² peut être un H,
un radical méthyle, éthyle, n-propyle, isopropyle, cyclohexyle, un radical 2-hydroxyéthyle, 2-hydroxypropyle, 3-hydroxypropyle et
R³ peut être un radical 2-hydroxyéthyle, 2-hydroxypropyle, 3-hydroxypropyle,
R¹ peut être le même ou différent et est un atome d'hydrogène ou un radical hydrocarboné en C₁-C₁₀ contenant éventuellement des hétéroatomes et
n vaut de 1 à 40.

10. Préparations aqueuses selon la revendication 1, **caractérisées en ce que** les polyorganosiloxanes contenant des groupes hydroxy a2) sont des composés de formule générale (V), 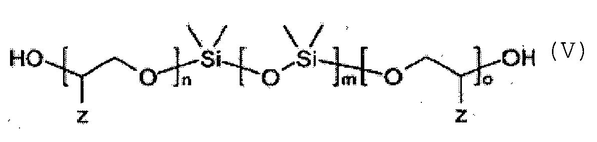 dans laquelle
m vaut de 5 à 15,
Z est H ou méthyle et
n, o valent de 1 à 12.

11. Préparations aqueuses selon la revendication 1, **caractérisées en ce que** les polyorganosiloxanes contenant des groupes hydroxy a2) sont des composés de formule générale (VI), 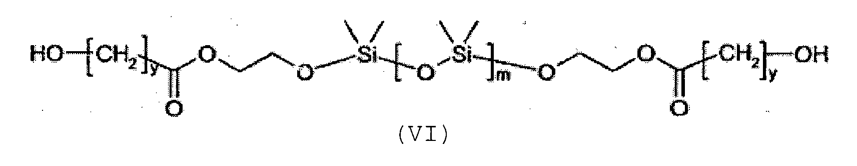 dans laquelle
m peut valoir de 5 à 15,
y peut valoir de 2 à 4.

12. Préparations aqueuses selon la revendication 1, **caractérisées en ce que** le composant a2) correspondant à la formule générale (I) présente une masse moléculaire moyenne en nombre de 200 à 3 000 g/mole et une fonctionnalité OH moyenne de ≥ 1,8.

13. Préparations aqueuses selon la revendication 1, **caractérisées en ce que** le composant a2) correspondant à la formule générale (I) présente une masse moléculaire moyenne en nombre de 250 à 2 250 g/mole.

14. Préparations aqueuses selon la revendication 1, **caractérisées en ce que** les particules du composant B) sont choisies dans le groupe des oxydes inorganiques, oxydes mixtes, carbures, borures et nitrures d'éléments des groupes IIA à IVA et/ou d'éléments des groupes IB à VIIIB du système périodique, y compris des lanthanides.

15. Préparations aqueuses selon la revendication 1, **caractérisées en ce que** le composant B) consiste en des nanoparticules inorganiques sous forme de dispersion colloïdale dans des solvants organiques (organosols) ou dans l'eau.

16. Préparations aqueuses selon la revendication 1, **caractérisées en ce que** le composant B) consiste en des nanoparticules inorganiques sous forme de leurs préparations aqueuses.

17. Préparations aqueuses selon la revendication 1, **caractérisées en ce que** le composant B) consiste en des nanoparticules inorganiques modifiées en surface.

18. Produit de revêtement aqueux contenant les préparations aqueuses selon la revendication 1 ainsi qu'au moins un agent de réticulation D).

19. Produit de revêtement aqueux bicomposant (2K) contenant des préparations aqueuses selon la revendication 1 ainsi qu'un polyisocyanate.

20. Utilisation des préparations aqueuses selon la revendication 1, pour la fabrication de vernis.
